# EUROPEAN PATENT SPECIFICATION

(11) **EP 4 102 128 B1**
(45) Date of publication and mention of the grant of the patent: **05.06.2024**
(21) Application number: 22175661.2
(22) Date of filing: 26.05.2022
(51) Int. Cl.: F17C 13/04

(54) **VALVE DEVICE FOR HIGH PRESSURE GAS STORAGE TANK**
VENTILVORRICHTUNG FÜR HOCHDRUCKGASSPEICHERTANK
DISPOSITIF À VANNE POUR RÉSERVOIR DE STOCKAGE DE GAZ À HAUTE PRESSION

(30) Priority: 07.06.2021 KR 20210073557
(43) Date of publication of application: 14.12.2022
(73) Proprietor: Iljin Hysolus Co., Ltd., Jeollabuk-do 55322 (KR)
(72) Inventor: LEE, Seok Jin, Wanju-gun (KR); KIM, Jang Gyun, Wanju-gun (KR); YIM, Jun Young, Wanju-gun (KR)
(74) Representative: HGF

(56) References cited:
- FR-A1- 2 905 446
- US-A- 2 380 562
- US-A- 3 479 043
- US-A1- 2018 195 669
- US-A1- 2019 047 407

## Description

### CROSS-REFERENCE TO RELATED APPLICATION

This application claims priority to and the benefit of Korean Patent Application No. 10-2021-0073557, filed on June 7, 2021.

### BACKGROUND

### 1. Field of the Invention

The present disclosure relates to a valve device for a high-pressure gas storage tank, and more particularly, to a valve device for a high-pressure gas storage tank capable of opening or closing a plurality of high-pressure gas storage tanks.

### 2. Discussion of Related Art

High-pressure gas storage tanks are containers in which gas such as hydrogen is compressed and stored. In the related art, in order to fix the high-pressure gas storage tanks to transportation units such as vehicles, frames for supporting lower portions of the high-pressure gas storage tanks are provided, and straps for fixing the high-pressure gas storage tanks to the frames are required. Further, nozzles of the high-pressure gas storage tanks should be fixed according to the number of the plurality of high-pressure gas storage tanks.

In support devices for the high-pressure gas storage tanks having such a structure, the number of components for fixing the high-pressure gas storage tanks increases, thereby increasing an assembling time, and thus reducing productivity. Therefore, it is required to improve this problem.

The background technology of the present disclosure is disclosed in Korean Patent Publication No. 10-1709059 (registered on February 16, 2017, title of the invention: Fuel tank support device).

An example document according to the art is US 3 479 043 (Piehl Bill) which describes a tank transport trailer comprising a semi-flexible wheeled trailer frame with one upright support at its front and another at its rear, supporting a plurality of long thin tanks and FR 2 905 446 A1 (SARL 2EBALM SARL) which describes a device for coupling small containers of gas type cartridge and in particular cartridge screw valves.

### SUMMARY OF THE INVENTION

The present disclosure is directed to providing a valve device for a high-pressure gas storage tank that may open or close a plurality of high-pressure gas storage tanks.

According to an aspect of the present disclosure, there is provided a valve device for a high-pressure gas storage tank, the valve device including a plurality of gas storage tanks having nozzle parts through which a gas is discharged, a block fixing part that accommodates the plurality of nozzle parts and has a gas flow path part, through which the gas discharged from the nozzle parts flows, in an internal space thereof, and an opening/closing part that is connected to the block fixing part and adjusts external discharge of the gas discharged from the nozzle parts and flowing to the gas flow path part.

The valve device further includes a fastening part that fixes the block fixing part to the gas storage tank. Each of the gas storage tanks includes a tank part that stores the gas in an internal space thereof and has the nozzle part at an end thereof, and a flange part that surrounds the nozzle part, is fixed to the tank part, and is fastened to the fastening part.

The block fixing part includes a block fixing body part that accommodates the plurality of nozzle parts and has the gas flow path part formed in an internal space thereof, and a nozzle insertion part which is formed in a concave shape inside the block fixing body part, into which the nozzle part is inserted, and which communicates with the gas flow path part.

The gas flow path part is formed in the block fixing body part in a lengthwise direction of the block fixing body part, may communicate with the nozzle insertion part, may guide a flow of the gas discharged from the nozzle part, and is connected to the opening/closing part.

The flange part may have fastening hole parts fastened to the plurality of fastening parts.

The fastening hole parts may be formed in the flange part in an annular shape.

According to another aspect of the present disclosure, there is provided a valve device for a high-pressure gas storage tank, the valve device including a plurality of gas storage tanks having nozzle parts through which a gas is discharged, a first block fixing part that accommodates some of the plurality of nozzle parts and has a first gas flow path part, through which the gas discharged from the nozzle parts flows, in an internal space thereof, a second block fixing part that is spaced apart from the first block fixing part, accommodates the remainder among the plurality of nozzle parts, and has a second gas flow path part, through which the gas discharged from the nozzle parts flows, in an internal space thereof, an auxiliary fixing part that is interposed between the first block fixing part and the second block fixing part and communicates with the first gas flow path part and the second gas flow path part, a first opening/closing part that is connected to the first block fixing part and adjusts external discharge of the gas discharged from the nozzle parts and flowing to the first gas flow path part, and a second opening/closing part that is connected to the second block fixing part and adjusts external discharge of the gas discharged from the nozzle parts and flowing to the second gas flow path part.

The valve device further includes a fastening part that fixes the first block fixing part and the second block fixing part to the gas storage tank.

Each of the gas storage tanks includes a tank part that stores the gas in an internal space thereof and has the nozzle part at an end thereof, and a flange part that surrounds the nozzle part, is fixed to the tank part, and is fastened to the fastening part.

The first block fixing part includes a first block fixing body part that accommodates some of the plurality of nozzle parts and has the first gas flow path part formed in an internal space thereof, and a first nozzle insertion part which is formed in a concave shape inside the first block fixing body part, into which the nozzle part is inserted, and which communicates with the first gas flow path part, and the second block fixing part includes a second block fixing body part that is spaced apart from the first block fixing body part, accommodates the remainder of the plurality of nozzle parts, and has the second gas flow path part formed in an internal space thereof, and a second nozzle insertion part which is formed in a concave shape inside the second block fixing body part, into which the nozzle part is inserted, and which communicates with the second gas flow path part.

The first gas flow path part is formed in the first block fixing body part in a lengthwise direction of the first block fixing body part, communicates with the first nozzle insertion part, guides a flow of the gas discharged from the nozzle parts, and is connected to the first opening/closing part, and the second gas flow path part is formed in the second block fixing body part in a lengthwise direction of the second block fixing body part, communicates with the second nozzle insertion part, guides the flow of the gas discharged from the nozzle parts, and is connected to the second opening/closing part.

The flange part may have fastening hole parts fastened to the plurality of fastening parts.

The fastening hole parts may be formed in the flange part in an annular shape.

### BRIEF DESCRIPTION OF THE DRAWINGS

The above and other objects, features and advantages of the present invention will become more apparent to those of ordinary skill in the art by describing exemplary embodiments thereof in detail with reference to the accompanying drawings, in which:
FIG. 1 is a perspective view schematically illustrating a valve device for a high-pressure gas storage tank according to one embodiment of the present disclosure;
FIG. 2 is an assembled perspective view schematically illustrating the valve device for a high-pressure gas storage tank according to one embodiment of the present disclosure;
FIG. 3 is an assembled plan cross-sectional view schematically illustrating the valve device for a high-pressure gas storage tank according to one embodiment of the present disclosure;
FIG. 4 is a partial enlarged view schematically illustrating part "A" of FIG. 3;
FIG. 5 is a plan cross-sectional view schematically illustrating a flow of gas in the valve device for a high-pressure gas storage tank according to one embodiment of the present disclosure;
FIG. 6 is a perspective view schematically illustrating a valve device for a high-pressure gas storage tank according to another embodiment of the present disclosure;
FIG. 7 is an assembled perspective view schematically illustrating the valve device for a high-pressure gas storage tank according to another embodiment of the present disclosure;
FIG. 8 is an assembled plan cross-sectional view schematically illustrating the valve device for a high-pressure gas storage tank according to another embodiment of the present disclosure;
FIG. 9 is a partial enlarged view schematically illustrating part "B" of FIG. 8; and
FIG. 10 is a plan cross-sectional view schematically illustrating a flow of gas in the valve device for a high-pressure gas storage tank according to another embodiment of the present disclosure.

### DETAILED DESCRIPTION OF EXEMPLARY EMBODIMENTS

Hereinafter, embodiments of a valve device for a high-pressure gas storage tank according to the present disclosure will be described with reference to the accompanying drawings. In this process, the thicknesses of lines or the sizes of components illustrated in the drawings may be exaggerated for clarity and convenience of description.

Further, terms described below are defined in consideration of functions in the present disclosure and may change according to the intention or custom of a user or an operator. Therefore, definitions of these terms should be made based on the contents throughout the present specification.

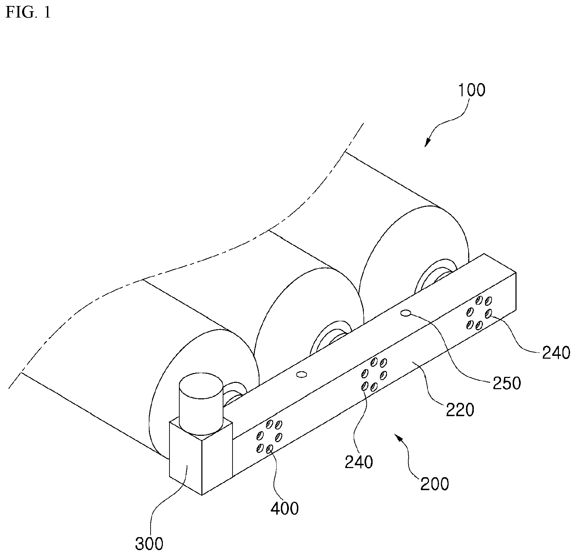

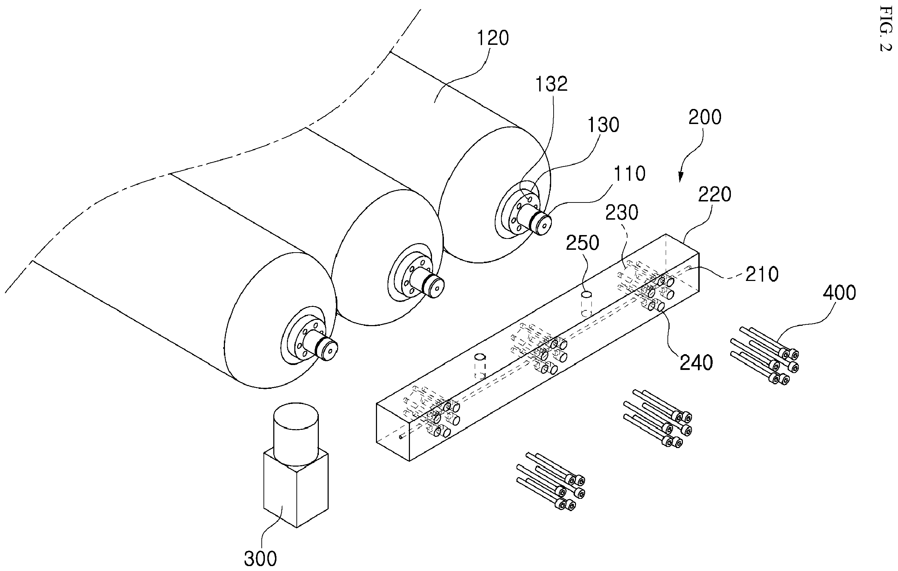

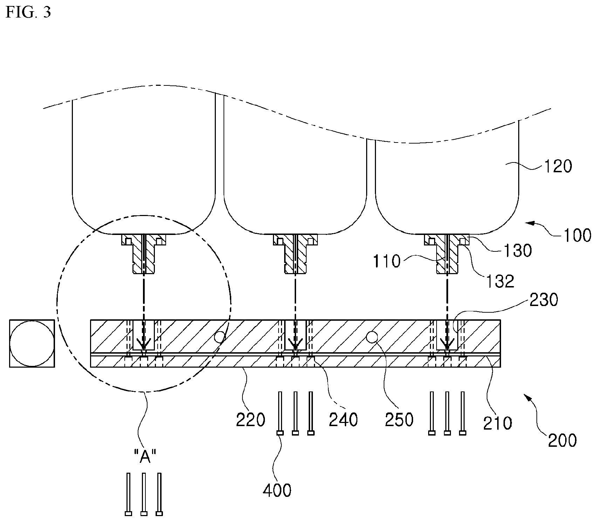

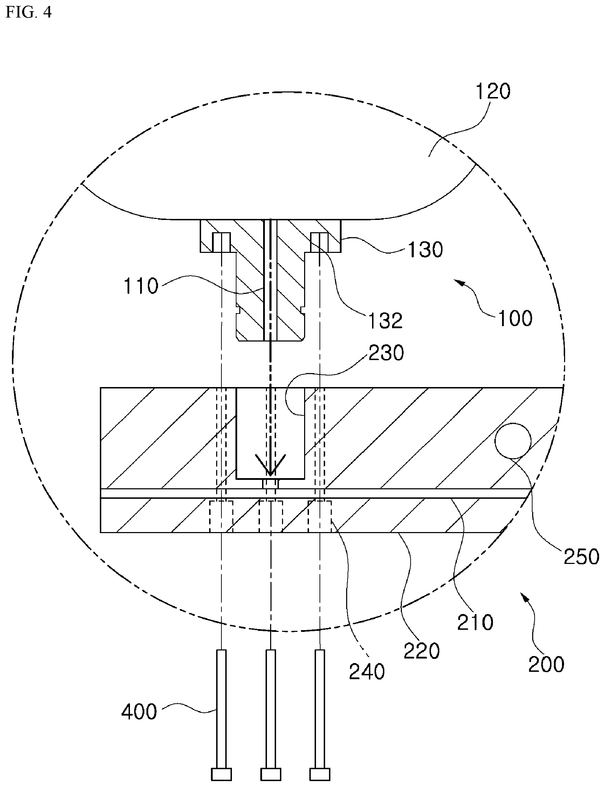

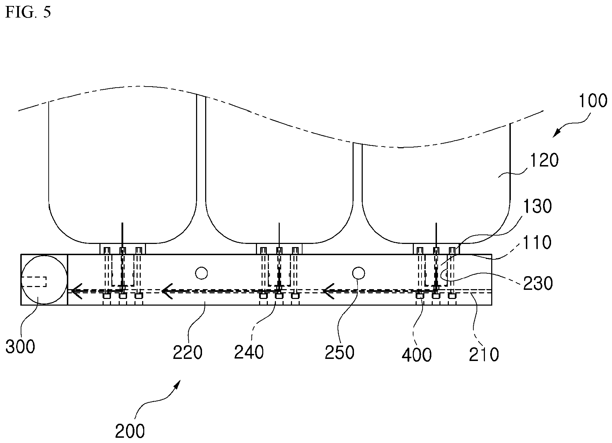

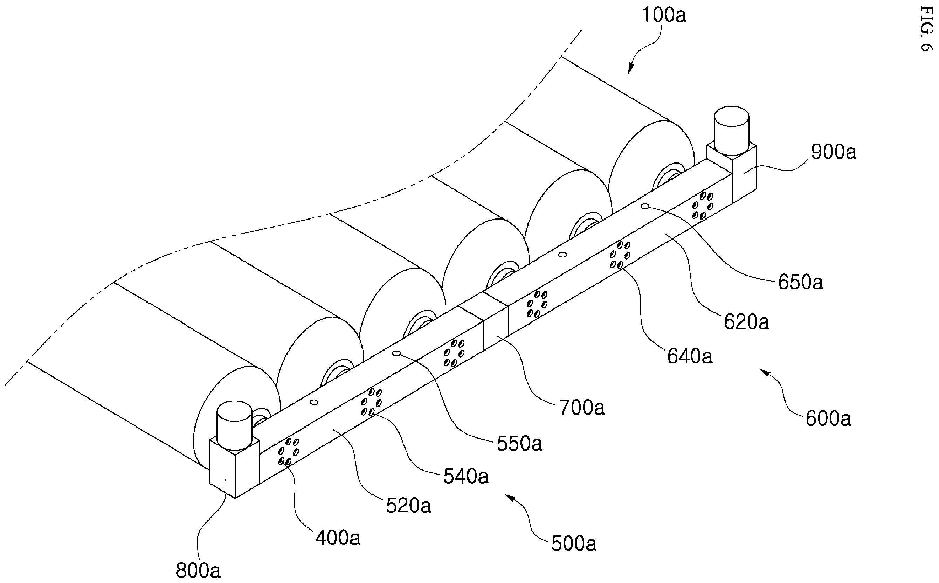

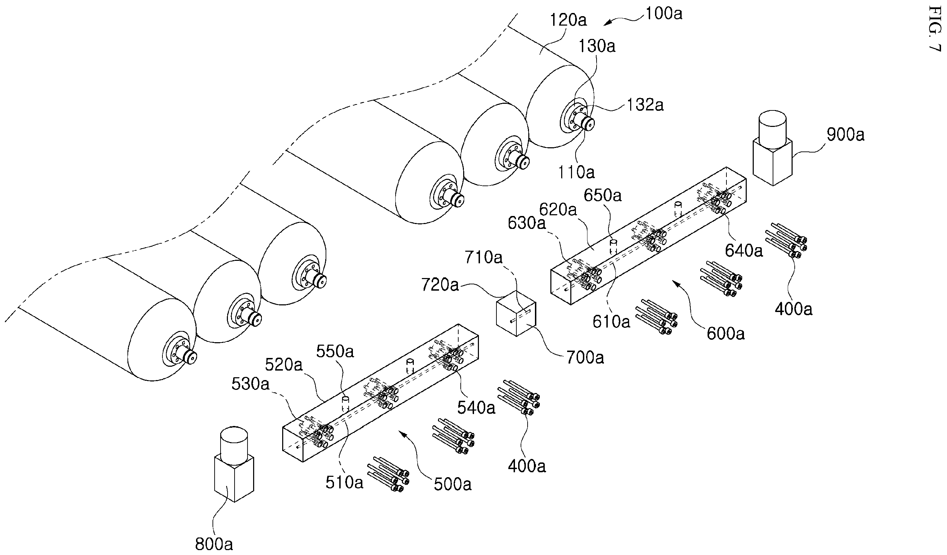

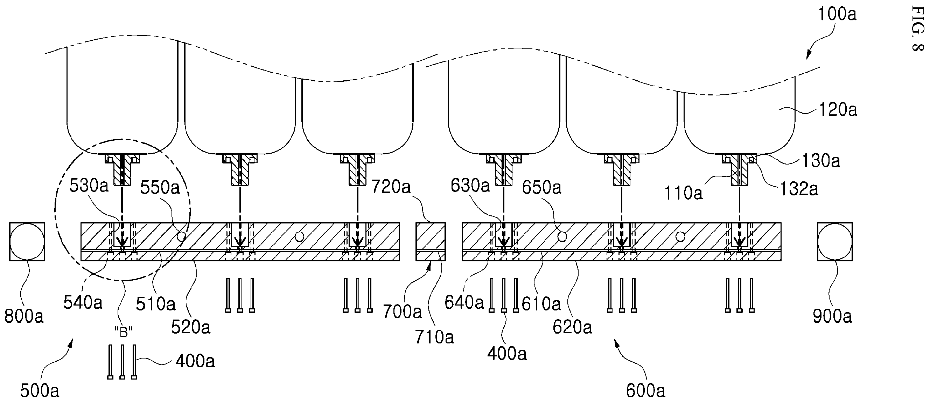

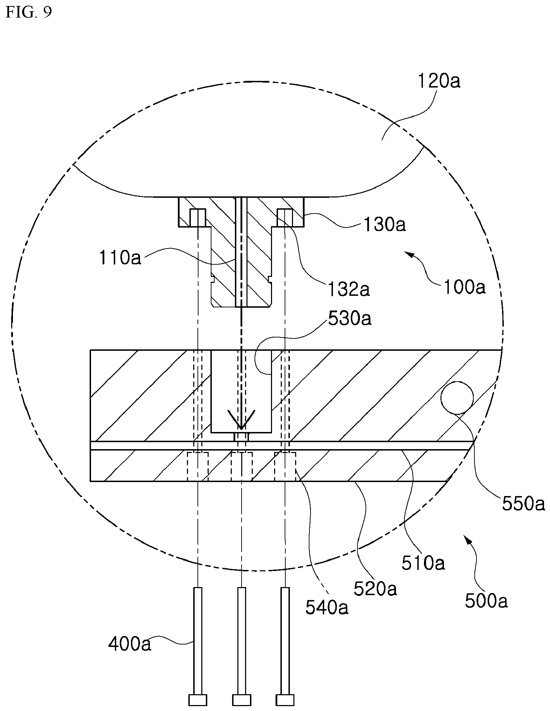

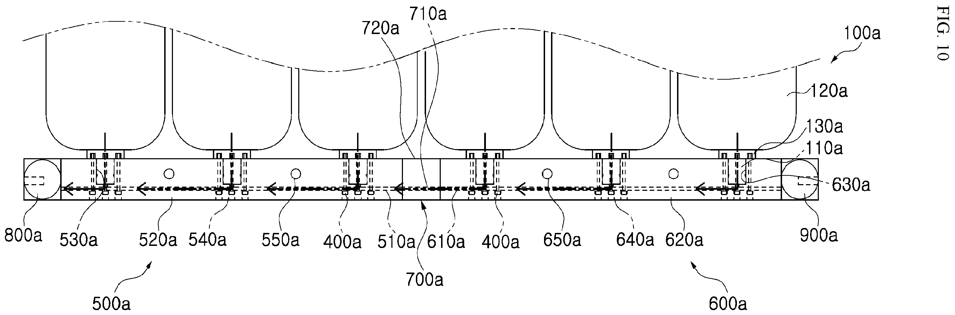

FIG. 1 is a perspective view schematically illustrating a valve device for a high-pressure gas storage tank according to one embodiment of the present disclosure, FIG. 2 is an assembled perspective view schematically illustrating the valve device for a high-pressure gas storage tank according to one embodiment of the present disclosure, FIG. 3 is an assembled plan cross-sectional view schematically illustrating the valve device for a high-pressure gas storage tank according to one embodiment of the present disclosure, FIG. 4 is a partial enlarged view schematically illustrating part "A" of FIG. 3, FIG. 5 is a plan cross-sectional view schematically illustrating a flow of gas in the valve device for a high-pressure gas storage tank according to one embodiment of the present disclosure, FIG. 6 is a perspective view schematically illustrating a valve device for a high-pressure gas storage tank according to another embodiment of the present disclosure, FIG. 7 is an assembled perspective view schematically illustrating the valve device for a high-pressure gas storage tank according to another embodiment of the present disclosure, FIG. 8 is an assembled plan cross-sectional view schematically illustrating the valve device for a high-pressure gas storage tank according to another embodiment of the present disclosure, FIG. 9 is a partial enlarged view schematically illustrating part "B" of FIG. 8, and FIG. 10 is a plan cross-sectional view schematically illustrating a flow of gas in the valve device for a high-pressure gas storage tank according to another embodiment of the present disclosure.

Referring to FIGS. 1 to 5, the valve device for a high-pressure gas storage tank according to one embodiment of the present disclosure includes a gas storage tank 100, a block fixing part 200, and an opening/closing part 300. The valve device for a high-pressure gas storage tank according to one embodiment of the present disclosure further includes a fastening part 400.

The gas storage tank 100 is a container in which a gas such as hydrogen is compressed and stored in an internal space thereof. The gas storage tank 100 is mounted on a vehicle such as a hydrogen fuel electric vehicle. The gas storage tank 100 is formed in a cylindrical shape having both ends in an elliptical shape, and thus prevents damage due to gas pressure.

The gas storage tank 100 has a nozzle part 110 through which a gas is discharged and is provided as a plurality of gas storage tanks 100. The plurality of gas storage tanks 100 are arranged in a transverse direction (a width direction of the gas storage tank 100).

The gas storage tank 100 includes the nozzle part 110, a tank part 120, and a flange part 130. The nozzle part 110 is mounted at an end (a right end with reference to FIG. 1) of the tank part 120 and is a passage through which a gas stored in an internal space of the tank part 120 is discharged.

The tank part 120 stores a gas in the internal space thereof and has the nozzle part 110 at the end (a right end with reference to FIG. 1). The tank part 120 is formed in a cylindrical shape having both ends in an elliptical shape, and thus prevents damage due to gas pressure.

The flange part 130 surrounds an outer surface of the nozzle part 110, is fixed to the tank part 120, and is fastened to the fastening part 400.

The flange part 130 includes fastening hole parts 132 fastened to the plurality of fastening parts 400. A screw thread screw-coupled to the fastening part 400 is formed on an inner surface of the fastening hole part 132. The fastening hole part 132 is formed in an annular shape in the flange part 130. The plurality of fastening hole parts 132 are arranged in the flange part 130 to be spaced apart from each other at regular intervals. The fastening hole parts 132 are arranged in the flange part 130 in an annular shape to be spaced apart from each other at regular intervals and thus a fastening force can be stable and can be prevented from being concentrated in a specific location.

The block fixing part 200 accommodates the plurality of nozzle parts 110 and has a gas flow path part 210 through which a gas discharged from the nozzle parts 110 flows in an inner space thereof. The block fixing part 200 is formed with a length sufficient for accommodating the plurality of nozzle parts 110. The block fixing part 200 includes the gas flow path part 210, a block fixing body part 220, and a nozzle insertion part 230.

The gas flow path part 210 is formed inside the block fixing body part 220 in a lengthwise direction of the block fixing body part 220 and forms a passage through which the gas discharged from the nozzle parts 110 flows.

The gas flow path part 210 is formed in the block fixing body part 220 in the lengthwise direction of the block fixing body part 220, communicates with the nozzle insertion part 230, and guides the flow of the gas discharged from the nozzle parts 110.

The gas flow path part 210 is connected to the opening/closing part 300. The gas flowing in the gas flow path part 210 is discharged to the outside when the opening/closing part 300 is opened. When the opening/closing part 300 is closed, the gas flowing in the gas flow path part 210 is not discharged to the outside.

The block fixing body part 220 accommodates the plurality of nozzle parts 110 and has the gas flow path part 210 formed in an internal space thereof. The block fixing body part 220 is formed with a length sufficient for accommodating the plurality of nozzle parts 110. The gas flow path part 210 is formed inside the block fixing body part 220 in the lengthwise direction of the block fixing body part 220. The nozzle insertion part 230 communicating with the gas flow path part 210 is formed in the block fixing body part 220.

The nozzle insertion part 230 is formed in a concave shape inside the block fixing body part 220, the nozzle part 110 is inserted into the nozzle insertion part 230, and the nozzle insertion part 230 communicates with the gas flow path part 210. An inner diameter of the nozzle insertion part 230 is formed to correspond to an outer diameter of the nozzle part 110.

In the present disclosure, the block fixing part 200 further includes a through-hole part 240 and a mounting hole part 250. The through-hole parts 240 are formed in the block fixing body part 220 to correspond to locations and the number of the fastening hole parts 132 formed therein. The fastening parts 400 are inserted through the through-hole parts 240.

A plurality of mounting hole parts 250 are formed through the block fixing body part 220 in the lengthwise direction of the block fixing body part 220. Separate fastening members such as screws or bolts are inserted through the mounting hole parts 250 to form holes that may be fixed to a vehicle or the like.

Referring to FIG. 5, the opening/closing part 300 is connected to the gas flow path part 210 of the block fixing part 200 and adjusts external discharge of the gas discharged from the nozzle part 110 and flowing into the gas flow path part 210. When the opening/closing part 300 is opened, the gas flowing in the gas flow path part 210 is discharged to the outside. When the opening/closing part 300 is closed, the gas flowing in the gas flow path part 210 is not discharged to the outside. The opening/closing part 300 may be operated in an automatic manner or a manual manner through a controller (not illustrated). The opening/closing part 300 may be connected to another device (not illustrated) and allow the gas flowing in the gas flow path part 210 to flow to another device.

The fastening part 400 fixes the block fixing part 200 to the gas storage tank 100. A screw thread screw-coupled to the fastening hole part 132 of the flange part 130 is formed in an outer surface of the fastening part 400.

The fastening part 400 is screw-coupled to the fastening hole part 132 of the flange part 130 of the gas storage tank 100 through the through-hole part 240 of the block fixing part 200. The block fixing part 200 is fixed to the gas storage tank 100 through the screw coupling between the fastening part 400 and the fastening hole part 132. Thus, the block fixing part 200 may stably support the gas storage tank 100.

A head portion of the fastening part 400 is formed to be inserted into the through-hole part 240 of the block fixing part 200. Since the head portion of the fastening part 400 is inserted into the through-hole part 240 and is not exposed to the outside, accidents such as collision with a nearby device can be prevented.

Referring to FIGS. 6 to 10, the valve device for a high-pressure gas storage tank according to another embodiment of the present disclosure includes a gas storage tank 100a, a first block fixing part 500a, a second block fixing part 600a, an auxiliary block fixing part 700a, a first opening/closing part 800a, and a second opening/closing part 900a. The valve device for a high-pressure gas storage tank according to another embodiment of the present disclosure further includes a fastening part 400a.

The gas storage tank 100a is a container in which a gas such as hydrogen is compressed and stored in an internal space thereof. The gas storage tank 100a is mounted on a vehicle such as a hydrogen fuel electric vehicle. The gas storage tank 100a is formed in a cylindrical shape having both ends in an elliptical shape, and thus prevents damage due to gas pressure.

The gas storage tank 100a has a nozzle part 110a through which a gas is discharged and is provided as a plurality of gas storage tanks 100a. The plurality of gas storage tanks 100a are arranged in the transverse direction (a width direction of the gas storage tank 100a). Although it is illustrated in FIG. 6 that six gas storage tanks 100a are arranged, the present disclosure is not limited thereto.

The gas storage tank 100a includes a nozzle part 110a, a tank part 120a, and a flange part 130a. The nozzle part 110a is mounted at an end (a right end with reference to FIG. 6) of the tank part 120a and is a passage through which gas stored in an internal space of the tank part 120a is discharged.

The tank part 120a stores a gas in the internal space thereof and has the nozzle part 110a at the end (a right end with reference to FIG. 6). The tank part 120a is formed in a cylindrical shape having both ends in an elliptical shape, and thus prevents damage due to gas pressure.

The flange part 130a surrounds an outer surface of the nozzle part 110a, is fixed to the tank part 120a, and is fastened to the fastening part 400a.

The flange part 130a includes fastening hole parts 132a fastened to the plurality of fastening parts 400a. A screw thread screw-coupled to the fastening part 400a is formed on an inner surface of the fastening hole part 132a. The fastening hole part 132a is formed in an annular shape in the flange part 130a. The plurality of fastening hole parts 132a are arranged in the flange part 130a to be spaced apart from each other at regular intervals. The fastening hole parts 132a are arranged in the flange part 130a in an annular shape to be spaced apart from each other at regular intervals and thus a fastening force can be stable and can be prevented from being concentrated in a specific location.

The first block fixing part 500a and the second block fixing part 600a may be connected to each other to stably support the plurality of gas storage tanks 100a. In the present disclosure, the first block fixing part 500a and the second block fixing part 600a are connected to each other by the auxiliary block fixing part 700a.

The first block fixing part 500 accommodates some of the plurality of nozzle parts 110a and includes a first gas flow path part 510a in an internal space thereof, through which the gas discharged from the nozzle part 110a flows. The first block fixing part 500a is formed with a length sufficient for accommodating some of the plurality of nozzle parts 110a. The first block fixing part 500a includes the first gas flow path part 510a, a first block fixing body part 520a, and a first nozzle insertion part 530a.

The first gas flow path part 510a is formed inside the first block fixing body part 520a in a lengthwise direction of the first block fixing body part 520a and forms a passage through which a gas discharged from the nozzle part 110a flows.

The first gas flow path part 510a is formed in the first block fixing body part 520a in the lengthwise direction of the first block fixing body part 520a, communicates with the first nozzle insertion part 530a, and guides the flow of the gas discharged from the nozzle part 110a.

The first gas flow path part 510a is connected to the first opening/closing part 800a. When the first opening/closing part 800a is opened, the gas flowing in the first gas flow path part 510a is discharged to the outside. When the first opening/closing part 800a is closed, the gas flowing in the first gas flow path part 510a is not discharged to the outside.

Alternatively, when the first opening/closing part 800a is closed and the second opening/closing part 900a is opened, the gas flowing in the first gas flow path part 510a flows to a second gas flow path part 610a of the second block fixing part 600a through an auxiliary gas flow path part 710a of the auxiliary block fixing part 700a and is discharged to the outside through the second opening/closing part 900a.

The first block fixing body part 520a accommodates some of the plurality of nozzle parts 110a and has the first gas flow path part 510 formed in an internal space thereof. The first block fixing body part 520a is formed with a length sufficient for accommodating some of the plurality of nozzle parts 110a (a left nozzle part 110a with reference to FIG. 3). The first gas flow path part 510a is formed inside the first block fixing body part 520a in the lengthwise direction of the first block fixing body part 520a. The first nozzle insertion part 530a communicating with the first gas flow path part 510a is formed in the first block fixing body part 520a.

The first nozzle insertion part 530a is formed in a concave shape inside the first block fixing body part 520a, the nozzle part 110a is inserted into the first nozzle insertion part 530a, and the first nozzle insertion part 530a communicates with the first gas flow path part 510a. An inner diameter of the first nozzle insertion part 530a is formed to correspond to an outer diameter of the nozzle part 110a.

In the present disclosure, the first block fixing part 500a further includes a first through-hole part 540a and a first mounting hole part 550a. The first through-hole part 540a is formed through the first block fixing body part 520a to correspond to locations and the number of the fastening hole parts 132a. The fastening part 400a is inserted through the first through-hole part 540a.

A plurality of first mounting hole parts 550a are formed through the first block fixing body part 520a in the lengthwise direction of the first block fixing body part 520a. Separate fastening members such as screws or bolts are inserted through the first mounting hole parts 550a to form holes that may be fixed to a vehicle or the like.

The second block fixing part 600a accommodates the remainder not accommodated in the first block fixing part 500a among the plurality of nozzle parts 110a and has the second gas flow path part 610a formed in an internal space thereof, through which the gas discharged from the nozzle part 110a flows. The second block fixing part 600a is formed with a length sufficient for accommodating the remainder not accommodated in the first block fixing part 500a among the plurality of nozzle parts 110a. The second block fixing part 600a includes the second gas flow path part 610a, a second block fixing body part 620a, and a second nozzle insertion part 630a.

The second gas flow path part 610a is formed inside the second block fixing body part 620a in a lengthwise direction of the second block fixing body part 620a and forms a passage through which the gas discharged from the nozzle part 110a flows.

The second gas flow path part 610a is formed in the second block fixing body part 620a in the lengthwise direction of the second block fixing body part 620a, communicates with the second nozzle insertion part 630a, and guides the flow of the gas discharged from the nozzle part 110a.

The second gas flow path part 610a is connected to the second opening/closing part 900a. When the second opening/closing part 900a is opened, the gas flowing in the second gas flow path part 610a is discharged to the outside. When the second opening/closing part 900a is closed, the gas flowing in the second gas flow path part 610a is not discharged to the outside.

Alternatively, when the second opening/closing part 900a is closed and the first opening/closing part 800a is opened, the gas flowing in the second gas flow path part 610a flows to the first gas flow path part 510a of the first block fixing part 500a through the auxiliary gas flow path part 710a of the auxiliary block fixing part 700a and is discharged to the outside through the first opening/closing part 800a.

The second block fixing body part 620a accommodates the remainder not accommodated in the first block fixing body part 520a among the plurality of nozzle parts 110a and has the second gas flow path part 610a formed in an internal space thereof. The second block fixing body part 620a is formed with a length sufficient for accommodating some of the plurality of nozzle parts 110a (right nozzle part 110a with reference to FIG. 3). The second gas flow path part 610a is formed inside the second block fixing body part 620a in the lengthwise direction of the second block fixing body part 620a. The second nozzle insertion part 630a communicating with the second gas flow path part 610a is formed in the second block fixing body part 620a.

The second nozzle insertion part 630a is formed in a concave shape inside the second block fixing body part 620a, the nozzle part 110a is inserted into the second nozzle insertion part 630a, and the second nozzle insertion part 630a communicates with the second gas flow path part 610a. An inner diameter of the second nozzle insertion part 630a is formed to correspond to an outer diameter of the nozzle part 110a.

In the present disclosure, the second block fixing part 600a further includes a second through-hole part 640a and a second mounting hole part 650a. The second through-hole part 640a is formed through the second block fixing body part 620a to correspond to locations and the number of the fastening hole parts 132a. The fastening part 400a is inserted through the second through-hole part 640a.

A plurality of second mounting hole parts 650a are formed through the second block fixing body part 620a in the lengthwise direction of the second block fixing body part 620a. Separate fastening members such as screws or bolts are inserted through the second mounting hole parts 650a to form holes that may be fixed to a vehicle or the like.

The auxiliary block fixing part 700a is interposed between the first block fixing part 500a and the second block fixing part 600a and communicates with the first gas flow path part 510a and the second gas flow path part 610a. The auxiliary block fixing part 700a includes the auxiliary gas flow path part 710a and an auxiliary block fixing body part 720a.

The auxiliary gas flow path part 710a communicates with the first gas flow path part 510a and the second gas flow path part 610a. The auxiliary gas flow path part 710a communicates with the first gas flow path part 510a and the second gas flow path part 610a, so that the gas flowing in the first gas flow path part 510a flows to the second gas flow path part 610 through the auxiliary gas flow path part 710a or the gas flowing in the second gas flow path part 610 flows to the first gas flow path part 510a through the auxiliary gas flow path part 710a.

The auxiliary block fixing body part 720a is interposed between the first block fixing body part 520a and the second block fixing body part 620a. The auxiliary block fixing body part 720a may connect the first block fixing body part 520a and the second block fixing body part 620a. The auxiliary gas flow path part 710a is formed inside the auxiliary block fixing body part 720a.

FIG. 10 is a view schematically illustrating a flow of the gas when the first opening/closing part 800a is opened and the second opening/closing part 900a is closed according to another embodiment of the present disclosure.

The first opening/closing part 800a is connected to the first gas flow path part 510a of the first block fixing part 500a and adjusts external discharge of the gas discharged from the nozzle part 110a and flowing in the first gas flow path part 510a. When the first opening/closing part 800a is opened, the gas is discharged to the outside through the first opening/closing part 800a. When the first opening/closing part 800a is closed, the gas is not discharged to the outside through the first opening/closing part 800a.

When the first opening/closing part 800a is closed and the second opening/closing part 900a is opened, the gas flowing in the first gas flow path part 510a flows to the second gas flow path part 610a of the second block fixing part 600a through the auxiliary gas flow path part 710a of the auxiliary block fixing part 700a and is discharged to the outside through the second opening/closing part 900a.

The first opening/closing part 800a may be operated in an automatic manner or a manual manner through the controller. The first opening/closing part 800a is connected to another device and allows the gas flowing in the first gas flow path part 510a or the second gas flow path part 610a to flow to the another device.

The second opening/closing part 900a is connected to the second gas flow path part 610a of the second block fixing part 600a and adjusts external discharge of the gas discharged from the nozzle part 110a and flowing in the second gas flow path part 610a. When the second opening/closing part 900a is opened, the gas is discharged to the outside through the second opening/closing part 900a. When the second opening/closing part 900a is closed, the gas is not discharged to the outside through the second opening/closing part 900a.

When the second opening/closing part 900a is closed and the first opening/closing part 800a is opened, the gas flowing in the second gas flow path part 610a flows to the first gas flow path part 510a of the first block fixing part 500a through the auxiliary gas flow path part 710a of the auxiliary block fixing part 700a and is discharged to the outside through the first opening/closing part 800a.

The second opening/closing part 900a may be operated in an automatic manner or a manual manner through the controller. The second opening/closing part 900a is connected to another device and allows the gas flowing in the first gas flow path part 510a or the second gas flow path part 610a to flow to the another device.

The fastening part 400a fixes the first block fixing part 500a and the second block fixing part 600a to the gas storage tank 100a. A screw thread screw-coupled to the fastening hole part 132a of the flange part 130a is formed in an outer surface of the fastening part 400a.

The fastening part 400a is screw-coupled to the fastening hole part 132a of the flange part 130a of the gas storage tank 100a through the first through-hole part 540a of the first block fixing part 500a or the second through-hole part 640a of the second block fixing part 600a. The first block fixing part 500a and the second block fixing part 600a are fixed to the gas storage tank 100a through the screw coupling between the fastening part 400a and the fastening hole part 132. Thus, the gas storage tank 100a may be stably supported by the first block fixing part 500a and the second block fixing part 600a.

A head portion of the fastening part 400a is formed to be inserted into the first through-hole part 540a of the first block fixing part 500a or the second through-hole part 640a of the second block fixing part 600a. The head portion of the fastening part 400a is inserted into the first through-hole part 540a and the second through-hole part 640a and is not exposed to the outside, and thus accidents such as collision with a nearby device can be prevented.

According to the valve device for a high-pressure gas storage tank according to the present disclosure, since the plurality of nozzle parts of the gas storage tanks can be fixed using the block fixing part, the number of fixing components is reduced, and thus product costs can be reduced.

Further, according to the present disclosure, since the number of the fixing components of the plurality of gas storage tanks is reduced, an assembling time for a product can be shortened, and productivity can be improved.

Further, according to the present disclosure, since the discharge of the gas from the plurality of gas storage tanks can be integrally adjusted using the opening/closing part, the opening or closing of the gas can be easily adjusted.

Although the present disclosure has been described with reference to embodiments illustrated in the drawings, the description is merely illustrative, and those skilled in the art to which the technology belongs could understand that various modifications may be made. Thus, the true technical scope of the present disclosure should be determined by the appended claims.

Those of ordinary skill in the art to which the present invention pertains should understand that the present invention may be practiced in other specific forms without changing the technical idea or essential features thereof. Therefore, the embodiments described herein should be understood as illustrative in all aspects, instead of limiting. The scope of the present invention is defined by the claims below rather than the detailed description above. The meaning and scope of the claims and all changes or modifications should be interpreted as falling within the scope of the present invention.

It should be understood that this disclosure is, in many respects, only illustrative. Changes may be made in details, particularly in matters of shape, size, and arrangement of steps without exceeding the scope of the disclosure. This may include, to the extent that it is appropriate, the use of any of the features of one example embodiment being used in other embodiments. The invention's scope is, of course, defined in the language in which the appended claims are expressed.

## Claims

1. A valve device for a high-pressure gas storage tank, the valve device comprising:
a plurality of gas storage tanks (100) having nozzle parts (110) through which a gas is discharged;
a block fixing part (200) that accommodates the plurality of nozzle parts (110) and has a gas flow path part (210), through which the gas discharged from the nozzle parts (110) flows, in an internal space thereof;
a fastening part (400) that fixes the block fixing part (200) to the gas storage tank (100); and
an opening/closing part (300) that is connected to the block fixing part (200) and adjusts external discharge of the gas discharged from the nozzle parts (110) and flowing to the gas flow path part (210) wherein each of the gas storage tanks (100) includes a tank part (120) that stores the gas in an internal space thereof and has the nozzle part (110) at an end thereof; and a flange part (130) that surrounds the nozzle part (110), is fixed to the tank part (120), and is fastened to the fastening part (400),
wherein the block fixing part (200) includes a block fixing body part (220) that accommodates the plurality of nozzle parts (110) and has the gas flow path part (210) formed in an internal space thereof; and a nozzle insertion part (230) which is formed in a concave shape inside the block fixing body part (220), into which the nozzle part (110) is inserted, and which communicates with the gas flow path part (210), and
wherein the gas flow path part (210) is formed in the block fixing body part (220) in a lengthwise direction of the block fixing body part (220), communicates with the nozzle insertion part (230), guides a flow of the gas discharged from the nozzle part (110), and is connected to the opening/closing part (300).

2. The valve device of claim 1, wherein the flange part (130) has fastening hole parts (132) fastened to the plurality of fastening parts (400).

3. The valve device of claim 2, wherein the fastening hole parts (132) are formed in the flange part (130) in an annular shape.

4. A valve device for a high-pressure gas storage tank, the valve device comprising:
a plurality of gas storage tanks (100) having nozzle parts (110) through which a gas is discharged;
a first block fixing part (200) that accommodates some of the plurality of nozzle parts (110) and has a first gas flow path part (210), through which the gas discharged from the nozzle parts (110) flows, in an internal space thereof;
a second block fixing part (200) that is spaced apart from the first block fixing part (200), accommodates the remainder among the plurality of nozzle parts (110), and has a second gas flow path part (210), through which the gas discharged from the nozzle parts (110) flows, in an internal space thereof;
an auxiliary fixing part that is interposed between the first block fixing part (200) and the second block fixing part (200) and communicates with the first gas flow path part (210) and the second gas flow path part (210);
a fastening part (400) that fixes the first block fixing part (200) and the second block fixing part (200) to the gas storage tank (100);
a first opening/closing part (300) that is connected to the first block fixing part (200) and adjusts external discharge of the gas discharged from the nozzle parts (110) and flowing to the first gas flow path part (210); and
a second opening/closing part (300) that is connected to the second block fixing part (200) and adjusts external discharge of the gas discharged from the nozzle parts (110) and flowing to the second gas flow path part (210),
wherein each of the gas storage tanks (100) includes a tank part (120) that stores the gas in an internal space thereof and has the nozzle part (110) at an end thereof; and a flange part (130) that surrounds the nozzle part (110), is fixed to the tank part (120), and is fastened to the fastening part (400),
wherein the first block fixing part (200) includes a first block fixing body part (220) that accommodates some of the plurality of nozzle parts (110) and has the first gas flow path part (210) formed in an internal space thereof; and a first nozzle insertion part (230) which is formed in a concave shape inside the first block fixing body part (220), into which the nozzle part (110) is inserted, and which communicates with the first gas flow path part (210), and the second block fixing part (200) includes a second block fixing body part (220) that is spaced apart from the first block fixing body part (220), accommodates the remainder of the plurality of nozzle parts (110), and has the second gas flow path part (210) formed in an internal space thereof; and a second nozzle insertion part (230) which is formed in a concave shape inside the second block fixing body part (220), into which the nozzle part (110) is inserted, and which communicates with the second gas flow path part (210),
wherein the first gas flow path part (210) is formed in the first block fixing body part (220) in a lengthwise direction of the first block fixing body part (220), communicates with the first nozzle insertion part (230), guides a flow of the gas discharged from the nozzle parts (110), and is connected to the first opening/closing part (300), and the second gas flow path part (210) is formed in the second block fixing body part (220) in a lengthwise direction of the second block fixing body part (220), communicates with the second nozzle insertion part (230), guides the flow of the gas discharged from the nozzle parts (110), and is connected to the second opening/closing part (300).

5. The valve device of claim 4, wherein the flange part (130) has fastening hole parts (132) fastened to the plurality of fastening parts (400).

6. The valve device of claim 5, wherein the fastening hole parts (132) are formed in the flange part (130) in an annular shape.

## Patentansprüche

1. Ventilvorrichtung für einen Hochdruckgasspeichertank, wobei die Ventilvorrichtung Folgendes umfasst:
eine Vielzahl von Gasspeichertanks (100), die Düsenteile (110) aufweist, durch die ein Gas abgegeben wird;
ein Blockfixierungsteil (200), das die Vielzahl von Düsenteilen (110) aufnimmt und in einem Innenraum davon ein Gasströmungspfadteil (210) aufweist, durch welches das von den Düsenteilen (110) abgegebene Gas strömt;
ein Befestigungsteil (400), welches das Blockfixierungsteil (200) an dem Gasspeichertank (100) fixiert; und
ein Öffnungs-/Schließteil (300), das mit dem Blockfixierungsteil (200) verbunden ist und eine externe Abgabe des von den Düsenteilen (110) abgegebenen und zu dem Gasströmungspfadteil (210) strömenden Gases einstellt, wobei jeder der Gasspeichertanks (100) Folgendes beinhaltet: ein Tankteil (120), welches das Gas in einem Innenraum davon speichert und an einem Ende davon das Düsenteil (110) aufweist; und ein Flanschteil (130), welches das Düsenteil (110) umgibt, an dem Tankteil (120) fixiert ist und an dem Befestigungsteil (400) befestigt ist,
wobei das Blockfixierungsteil (200) Folgendes beinhaltet: ein Blockfixierungskörperteil (220), das die Vielzahl von Düsenteilen (110) aufnimmt und in dessen Innenraum das Gasströmungspfadteil (210) gebildet ist; und ein Düseneinführteil (230), das in einer konkaven Form innerhalb des Blockfixierungskörperteils (220) gebildet ist, in welches das Düsenteil (110) eingeführt ist und das mit dem Gasströmungspfadteil (210) kommuniziert, und
wobei das Gasströmungspfadteil (210) in einer Längsrichtung des Blockfixierungskörperteils (220) in dem Blockfixierungskörperteil (220) gebildet ist, mit dem Düseneinführteil (230) kommuniziert, einen Strom des aus dem Düsenteil (110) abgegebenen Gases leitet und mit dem Öffnungs-/Schließteil (300) verbunden ist.

2. Ventilvorrichtung nach Anspruch 1, wobei das Flanschteil (130) Befestigungslochteile (132) aufweist, die an der Vielzahl von Befestigungsteilen (400) befestigt sind.

3. Ventilvorrichtung nach Anspruch 2, wobei die Befestigungslochteile (132) ringförmig in dem Flanschteil (130) gebildet sind.

4. Ventilvorrichtung für einen Hochdruckgasspeichertank, wobei die Ventilvorrichtung Folgendes umfasst:
eine Vielzahl von Gasspeichertanks (100), die Düsenteile (110) aufweist, durch die ein Gas abgegeben wird;
ein erstes Blockfixierungsteil (200), das einige der Vielzahl von Düsenteilen (110) aufnimmt und in einem Innenraum davon ein erstes Gasströmungspfadteil (210) aufweist, durch welches das von den Düsenteilen (110) abgegebene Gas strömt;
ein zweites Blockfixierungsteil (200), das von dem ersten Blockfixierungsteil (200) beabstandet ist, den Rest aus der Vielzahl von Düsenteilen (110) aufnimmt und in einem Innenraum davon ein zweites Gasströmungspfadteil (210) aufweist, durch welches das von den Düsenteilen (110) abgegebene Gas strömt;
ein Hilfsfixierungsteil, das zwischen dem ersten Blockfixierungsteil (200) und dem zweiten Blockfixierungsteil (200) eingefügt ist und mit dem ersten Gasströmungspfadteil (210) und dem zweiten Gasströmungspfadteil (210) kommuniziert;
ein Befestigungsteil (400), welches das erste Blockfixierungsteil (200) und das zweite Blockfixierungsteil (200) an dem Gasspeichertank (100) fixiert;
ein erstes Öffnungs-/Schließteil (300), das mit dem ersten Blockfixierungsteil (200) verbunden ist und eine externe Abgabe des von den Düsenteilen (110) abgegebenen und zu dem ersten Gasströmungspfadteil (210) strömenden Gases einstellt; und
ein zweites Öffnungs-/Schließteil (300), das mit dem zweiten Blockfixierungsteil (200) verbunden ist und eine externe Abgabe des von den Düsenteilen (110) abgegebenen und zu dem zweiten Gasströmungspfadteil (210) strömenden Gases einstellt,
wobei jeder der Gasspeichertanks (100) Folgendes beinhaltet: ein Tankteil (120), welches das Gas in einem Innenraum davon speichert und an einem Ende davon das Düsenteil (110) aufweist; und ein Flanschteil (130), welches das Düsenteil (110) umgibt, an dem Tankteil (120) fixiert ist und an dem Befestigungsteil (400) befestigt ist,
wobei das erste Blockfixierungsteil (200) Folgendes beinhaltet: ein erstes Blockfixierungskörperteil (220), das einige der Vielzahl von Düsenteilen (110) aufnimmt und in dessen Innenraum der erste Gasströmungspfadteil (210) gebildet ist; und ein erstes Düseneinführteil (230), das in einer konkaven Form innerhalb des erstes Blockfixierungskörperteils (220) gebildet ist, in welches das Düsenteil (110) eingeführt ist und das mit dem ersten Gasströmungspfadteil (210) kommuniziert, und das zweite Blockfixierungsteil (200) Folgendes beinhaltet: ein zweites Blockfixierungskörperteil (220), das von dem ersten Blockfixierungskörperteil (220) beabstandet ist, den Rest aus der Vielzahl von Düsenteilen (110) aufnimmt und in einem Innenraum davon ein zweites Gasströmungspfadteil (210) gebildet hat; und ein zweites Düseneinführteil (230), das in einer konkaven Form innerhalb des zweiten Blockfixierungskörperteils (220) gebildet ist, in welches das Düsenteil (110) eingeführt ist und das mit dem zweiten Gasströmungspfadteil (210) kommuniziert,
wobei das erste Gasströmungspfadteil (210) in einer Längsrichtung des ersten Blockfixierungskörperteils (220) in dem ersten Blockfixierungskörperteil (220) gebildet ist, mit dem ersten Düseneinführteil (230) kommuniziert, einen Strom des aus den Düsenteilen (110) abgegebenen Gases leitet und mit dem ersten Öffnungs-/Schließteil (300) verbunden ist und wobei das zweite Gasströmungspfadteil (210) in einer Längsrichtung des zweiten Blockfixierungskörperteils (220) in dem zweiten Blockfixierungskörperteil (220) gebildet ist, mit dem zweiten Düseneinführteil (230) kommuniziert, einen Strom des aus den Düsenteilen (110) abgegebenen Gases leitet und mit dem zweiten Öffnungs-/Schließteil (300) verbunden ist.

5. Ventilvorrichtung nach Anspruch 4, wobei das Flanschteil (130) Befestigungslochteile (132) aufweist, die an der Vielzahl von Befestigungsteilen (400) befestigt sind.

6. Ventilvorrichtung nach Anspruch 5, wobei die Befestigungslochteile (132) ringförmig in dem Flanschteil (130) gebildet sind.

## Revendications

1. Dispositif à vanne pour réservoir de stockage de gaz à haute pression, le dispositif à vanne comprenant :
une pluralité de réservoirs de stockage de gaz (100) comportant des parties de buses (110) à travers lesquelles un gaz est évacué ;
une partie de fixation de bloc (200) qui reçoit la pluralité de parties de buses (110) et comporte une partie de trajet d'écoulement de gaz (210), à travers laquelle s'écoule le gaz évacué des parties de buses (110), dans un espace interne de celle-ci ;
une partie d'attache (400) qui fixe la partie de fixation de bloc (200) au réservoir de stockage de gaz (100) ; et
une partie d'ouverture/fermeture (300) qui est reliée à la partie de fixation de bloc (200) et ajuste l'évacuation externe du gaz évacué par les parties de buses (110) et s'écoulant vers la partie de trajet d'écoulement de gaz (210), dans lequel chacun des réservoirs de stockage de gaz (100) comprend une partie de réservoir (120) qui stocke le gaz dans un espace interne de celui-ci et comporte la partie de buse (110) à une extrémité de celui-ci ; et une partie de bride (130) qui entoure la partie de buse (110), est fixée à la partie de réservoir (120) et est attachée à la partie d'attache (400),
dans lequel la partie de fixation de bloc (200) comprend une partie de corps de fixation de bloc (220) qui reçoit la pluralité de parties de buses (110) et comporte la partie de trajet d'écoulement de gaz (210) formée dans un espace interne de celle-ci ; et une partie d'insertion de buse (230) qui est formée selon une forme concave à l'intérieur de la partie de corps de fixation de bloc (220), dans lequel la partie de buse (110) est insérée, et qui communique avec la partie de trajet d'écoulement de gaz (210), et
dans lequel la partie de trajet d'écoulement de gaz (210) est formée dans la partie de corps de fixation de bloc (220) dans une direction longitudinale de la partie de corps de fixation de bloc (220), communique avec la partie d'insertion de buse (230), guide un écoulement de gaz évacué de la partie de buse (110) et est relié à la partie d'ouverture/fermeture (300).

2. Dispositif à vanne selon la revendication 1, dans lequel la partie de bride (130) comporte des parties de trou d'attache (132) attachées à la pluralité de parties d'attache (400).

3. Dispositif à vanne selon la revendication 2,
dans lequel les parties de trou d'attache (132) sont formées dans la partie de bride (130) dans une forme annulaire.

4. Dispositif à vanne pour réservoir de stockage de gaz à haute pression, le dispositif à vanne comprenant :
une pluralité de réservoirs de stockage de gaz (100) comportant des parties de buses (110) à travers lesquelles un gaz est évacué ;
une première partie de fixation de bloc (200) qui reçoit certaines de la pluralité de parties de buses (110) et comporte une première partie de trajet d'écoulement de gaz (210), à travers laquelle s'écoule le gaz évacué par les parties de buses (110), dans un espace interne de celle-ci ;
une seconde partie de fixation de bloc (200) qui est espacée de la première partie de fixation de bloc (200), reçoit le reste parmi la pluralité de parties de buses (110), et comporte une seconde partie de trajet d'écoulement de gaz (210), à travers laquelle s'écoule le gaz évacué des parties de buses (110), dans un espace interne de celle-ci ;
une partie de fixation auxiliaire qui est interposée entre la première partie de fixation de bloc (200) et la seconde partie de fixation de bloc (200) et communique avec la première partie de trajet d'écoulement de gaz (210) et la seconde partie de trajet d'écoulement de gaz (210) ;
une partie d'attache (400) qui fixe la première partie de fixation de bloc (200) et la seconde partie de fixation de bloc (200) au réservoir de stockage de gaz (100) ;
une première partie d'ouverture/fermeture (300) qui est reliée à la première partie de fixation de bloc (200) et ajuste l'évacuation externe du gaz évacué par les parties de buse (110) et s'écoulant vers la première partie de trajet d'écoulement de gaz (210) ; et
une seconde partie d'ouverture/fermeture (300) qui est reliée à la seconde partie de fixation de bloc (200) et ajuste l'évacuation externe du gaz évacué depuis les parties de buses (110) et s'écoulant vers la seconde partie de trajet d'écoulement de gaz (210),
dans lequel chacun des réservoirs de stockage de gaz (100) comprend une partie de réservoir (120) qui stocke le gaz dans un espace interne de celle-ci et comporte la partie de buse (110) à une extrémité de celle-ci ; et une partie de bride (130) qui entoure la partie de buse (110), est fixée à la partie de réservoir (120) et est attachée à la partie d'attache (400),
dans lequel la première partie de fixation de bloc (200) comprend une première partie de corps de fixation de bloc (220) qui reçoit certaines de la pluralité de parties de buse (110) et comporte la première partie de trajet d'écoulement de gaz (210) formée dans un espace interne de celle-ci ; et une première partie d'insertion de buse (230) qui est formée en une forme concave à l'intérieur de la première partie de corps de fixation de bloc (220), dans laquelle la partie de buse (110) est insérée, et qui communique avec la première partie de trajet d'écoulement de gaz (210), et la seconde partie de fixation de bloc (200) comprend une seconde partie de corps de fixation de bloc (220) qui est espacée de la première partie de corps de fixation de bloc (220), reçoit le reste de la pluralité de parties de buses (110), et comporte la seconde partie de trajet d'écoulement de gaz (210) formée dans un espace interne de celle-ci ; et une seconde partie d'insertion de buse (230) qui est formée dans une forme concave à l'intérieur de la seconde partie de corps de fixation de bloc (220), dans laquelle la partie de buse (110) est insérée, et qui communique avec la seconde partie de trajet d'écoulement de gaz (210),
dans lequel la première partie de trajet d'écoulement de gaz (210) est formée dans la première partie de corps de fixation de bloc (220) dans une direction longitudinale de la première partie de corps de fixation de bloc (220), communique avec la première partie d'insertion de buse (230), guide un écoulement du gaz évacué par les parties de buses (110), et est reliée à la première partie d'ouverture/fermeture (300), et la seconde partie de trajet d'écoulement de gaz (210) est formée dans la seconde partie de corps de fixation de bloc (220) dans une direction longitudinale de la seconde partie de corps de fixation de bloc (220), communique avec la seconde partie d'insertion de buse (230), guide l'écoulement de gaz évacué par les parties de buses (110) et est reliée à la seconde partie d'ouverture/fermeture (300).

5. Dispositif à vanne selon la revendication 4,
dans lequel la partie de bride (130) comporte des parties de trou d'attache (132) attachées à la pluralité de parties d'attache (400).

6. Dispositif à vanne selon la revendication 5,
dans lequel les parties de trou d'attache (132) sont formées dans la partie de bride (130) dans une forme annulaire.
